# FASCICULE DE BREVET EUROPEEN

(11) **EP 2 852 777 B1**
(45) Date de publication et mention de la délivrance du brevet: **22.06.2016**
(21) Numéro de dépôt: 13724234.3
(22) Date de dépôt: 16.05.2013
(51) Int. Cl.: F16F 9/49

(54) **AMORTISSEUR HYDRAULIQUE OPTIMISE CONTRE LES RISQUES DE TALONNAGE**
GEGEN DAS RISIKO VON ZUSAMMENSTÖSSEN OPTIMIERTER HYDRAULISCHER STOSSDÄMPFER
HYDRAULIC SHOCK ABSORBER THAT IS OPTIMIZED AGAINST THE RISKS OF BUMPING

(30) Priorité: 23.05.2012 FR 1254674
(43) Date de publication de la demande: 01.04.2015
(73) Titulaire: EMC, 69100 Villeurbanne (FR)
(72) Inventeur: SPECK, François, F-69100 Villeurbanne (FR)
(74) Mandataire: GIE Innovation Competence Group
(86) Numéro de dépôt international: PCT/EP2013/060203
(87) Numéro de publication internationale: WO 2013/174727

(56) Documents cités:
- EP-A1- 0 045 263
- WO-A1-2008/086605
- FR-E- 83 653
- US-A- 4 311 302

## Description

L'invention concerne les suspensions de véhicules. L'invention s'avère tout particulièrement appropriée pour des amortisseurs à grand débattement utilisés par exemple pour la pratique du tout-terrain.

L'utilisation d'une suspension est imposée par les irrégularités de la surface sur laquelle se déplace le véhicule. La suspension en diminue l'impact sur l'engin, évitant des ruptures et une usure excessive, améliorant le confort de conduite et maintenant le contact entre les roues et le sol malgré ses irrégularités. Le maintien du contact est une condition indispensable à la tenue de route et à la motricité. La suspension d'un véhicule comprend usuellement un élément ressort et un amortisseur pour relier une roue au châssis. L'élément ressort vise à suspendre le poids du véhicule. L'amortisseur sert à contrôler la vitesse des mouvements de la suspension en absorbant l'énergie transmise à la roue et au châssis, de façon à contrôler la vitesse et la limite de ses oscillations. Lors du transfert d'énergie cinétique en énergie potentielle dans la suspension, l'amortisseur réalise cette dissipation d'énergie.

La plupart des amortisseurs utilisés dans les véhicules sont des amortisseurs hydrauliques télescopiques. De tels amortisseurs utilisent les pertes de charge d'une huile circulant dans une enceinte close. Un piston est monté coulissant dans un tube rempli d'huile. Lors du déplacement du piston imposé par les mouvements de la roue ou du châssis, le piston force le fluide à traverser des perforations calibrées, des clapets distincts déformables, ou un système de limiteur de pression, prévus pour l'écoulement de l'huile dans ses mouvements de compression et de détente.

Sur la plupart des motos, la suspension avant est de type télescopique et la suspension arrière est à bras oscillant. Ces suspensions intègrent généralement des combinés ressort-amortisseur. De même, les véhicules de type quad tout terrain présentent le plus souvent des combinés ressort-amortisseur au niveau des roues arrières.

De tels véhicules tout-terrain comprennent des suspensions à grand débattement afin de pouvoir absorber les fortes déformations du terrain traversé. Les amortisseurs de telles suspensions doivent répondre à deux problématiques contradictoires. Ces amortisseurs doivent notamment être très souples sur le début de la course en compression afin de garantir un bon contact au sol de la roue, et être très freinés sur la fin de la course de compression pour éviter de talonner, en particulier lors de la réception d'un saut. Le talonnage correspond à un déplacement du piston jusqu'au bout de sa course de compression, position à laquelle l'amortisseur n'assure plus d'amortissement. Pour retarder le talonnage, il est usuel d'augmenter la raideur de l'élément ressort ou d'augmenter le freinage hydraulique de compression. De tels choix sont néfastes à la fois pour l'adhérence et le confort lors du roulage. Ces exigences contradictoires conduisent donc les metteurs au point à adopter un compromis pour les réglages de freinage d'écoulement et les choix de raideur de l'élément de ressort.

Le document WO2008/086605 décrit un amortisseur comportant un réservoir rempli de fluide hydraulique. Un piston est monté coulissant dans le réservoir et comporte un clapet de freinage hydraulique. Une rondelle est montée dans le réservoir et comporte également un clapet de freinage hydraulique. Le piston entraîne la rondelle à partir d'une certaine position dans sa course dans le réservoir.

Différentes solutions techniques connues visent à limiter l'apparition du talonnage. Une première solution consiste à utiliser des ressorts additionnels de fin de course. Une deuxième solution consiste à placer des butées en caoutchouc destinées à être comprimées en fin de course du piston. Une troisième solution consiste à former une butée hydraulique sur la fin de course du piston.

Un amortisseur selon la troisième solution comprend une protubérance sur le piston. En fin de course, cette protubérance pénètre dans un logement rempli d'huile disposé à une extrémité de l'amortisseur. Le logement est de section légèrement supérieure à celle de la protubérance. Lorsque la protubérance pénètre dans le logement, la course du piston se poursuit en déplaçant l'huile présente dans le logement.

Les deux premières solutions retardent l'apparition du talonnage mais présentent un inconvénient majeur lors son apparition. En fin de course, ces amortisseurs stockent une énergie importante avec un effet ressort. Cette énergie est restituée lors de la détente de l'amortisseur. Les réglages optimaux des clapets anti retour de détente ne freinent pas suffisamment le mouvement de détente induit à la fois par le ressort principal et par l'effet ressort du talonnage. La détente peut alors induire un rebond du véhicule selon un phénomène appelé coup de raquette. Un tel rebond peut perturber l'équilibre du véhicule et conduire à un accident. Une solution peut consister à utiliser un élément ressort de plus grande raideur pour retarder l'apparition du talonnage mais le choix amplifie des conséquences d'un talonnage et détériore la motricité du fait d'une mauvaise adaptation au relief du terrain.

La troisième solution permet de freiner la course du piston lors du talonnage en supprimant l'effet ressort et le rebond correspondant. Cette solution présente également des inconvénients. Cette solution ne permet de prévenir le talonnage que sur une course réduite, pour conserver un encombrement minimum de la protubérance et du logement. L'éventuelle augmentation de la longueur de la protubérance et du logement conduirait à un encombrement inapproprié de l'amortisseur ou à une limitation importante de sa course.

L'invention vise à résoudre un ou plusieurs de ces inconvénients. L'invention porte ainsi sur un amortisseur hydraulique de véhicule, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un système d'amortissement selon un mode de réalisation de l'invention ;
- la figure 2 est une vue en coupe longitudinale du corps du système d'amortisseur de la figure 1 ;
- la figure 3 est une vue en coupe longitudinale de l'amortisseur au niveau de son piston ;
- la figure 4 est une vue en coupe longitudinale de l'amortisseur au niveau de son répartiteur ;
- les figures 5 et 6 sont respectivement une vue en coupe longitudinale et une vue de face d'une vis creuse du répartiteur ;
- les figures 7 et 8 sont respectivement une vue en coupe longitudinale et une vue de derrière d'une platine frontale du répartiteur ;
- les figures 9 et 10 sont respectivement une vue en coupe longitudinale et une vue de face d'une platine distale du répartiteur ;
- la figure 11 est une vue en coupe longitudinale d'un piston d'obturation du conduit principal ;
- les figures 12 à 17 illustrent différentes phases de fonctionnement de l'amortisseur.

L'invention permet de disposer d'un amortissement plus important sur la fin de course de compression de l'amortisseur. Du fait d'un accroissement de la perte de charge sur l'écoulement du fluide hydraulique sur la fin de course de compression de l'amortisseur, le talonnage est ainsi retardé ou supprimé, et la raideur du ressort peut être réduite ainsi que la puissance de freinage hydraulique de compression. On évite ou limite l'effet coup de raquette lors de la détente qui suit et on améliore également le contact avec le sol (d'où amélioration de la motricité ou de l'adhérence) du fait d'une meilleure adaptation au profil du terrain. Cet amortissement plus important peut être obtenu sur une partie non négligeable de la course, du fait de l'escamotage du bouchon à l'intérieur de la tige du piston.

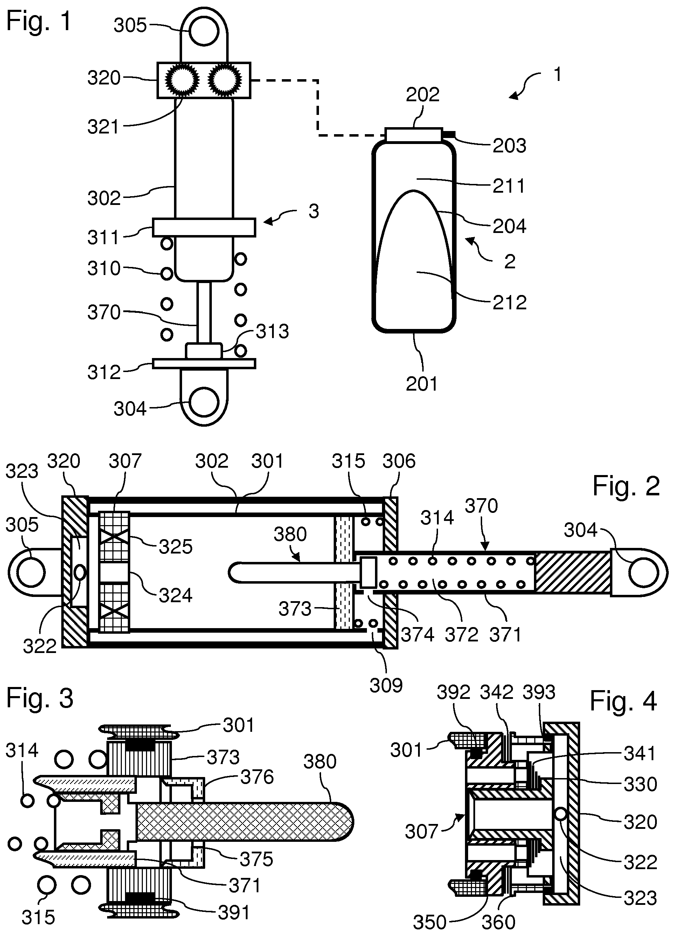

La figure 1 est une représentation schématique d'un système d'amortissement 1 selon un mode de réalisation de l'invention. Le système d'amortissement comprend un corps principal d'amortisseur 3 et un réservoir annexe 2 connectés par l'intermédiaire d'une conduite hydraulique.

La figure 2 est une vue schématique en coupe longitudinale du corps principal 3. Le corps principal 3 comprend un système de piston 370 monté coulissant à l'intérieur d'un cylindre externe 302 rempli d'huile. Le corps principal 3 présente un alésage 305 à une extrémité fixe et un alésage 304 à une autre extrémité depuis laquelle s'étend le système de piston 370. L'alésage 305 et l'alésage 304 sont destinés à fixer le corps principal 3 sur des arbres respectifs du châssis et d'un bras de suspension. Des rotules peuvent être montées dans les alésages 304 et 305 pour permettre un pivotement de l'amortisseur 3 autour d'axes de montage.

L'amortisseur 3 est du type combiné ressort-amortisseur et comprend ainsi un ressort de compression 310 entourant une tige 371 du système de piston 370. Un écrou 311 est vissé sur le cylindre externe 302 et permet avantageusement d'assurer le réglage en précontrainte du ressort 310. Le ressort 310 est comprimé entre l'écrou 311 et une butée 312 placée à proximité de l'alésage 304. Une butée de fin de course 313 est avantageusement disposée autour de la tige 371 entre la butée 312 et un bouchon 306 fixé à une extrémité du cylindre externe 302. Cette butée de fin de course 313 est par exemple réalisée en élastomère pour éviter un contact brutal entre le bouchon 306 et la butée 312 lors d'un talonnage.

Le corps principal 3 comprend en outre un bouchon 320 obturant l'extrémité du cylindre externe 302 et placé à proximité de l'alésage 305. Le bouchon 320 est par exemple fixé par vissage sur le cylindre extérieur 302. Une ou plusieurs molettes 321 sont placées sur le bouchon 320 et permettent par exemple d'assurer le réglage de l'amortisseur 1 en détente.

Le bouchon 320 délimite une chambre 323. Le bouchon 320 présente une entrée/sortie 322 en communication avec le réservoir annexe 2 par l'intermédiaire d'une conduite hydraulique.

Les mollettes 321 peuvent de façon connue en soi contrôler le réglage de pertes de charge de l'écoulement du fluide hydraulique à travers des valves (non illustrées) disposées entre l'entrée/sortie 322 et la chambre 323. Ces valves pouvant présenter des pertes de charge maximales pour des vitesses d'écoulement de fluide distinctes. L'utilisation de plusieurs couples de mollettes 321 et valves correspondantes permettent ainsi de réaliser un réglage d'amortissement de détente différencié pour une faible vitesse ou une haute vitesse de détente.

Le réservoir annexe 2 comporte un bouchon 202. Le réservoir annexe 2 comprend en outre un corps 201. Le corps 201 est délimité de façon connue en soit en deux volumes distincts 211 et 212, par l'intermédiaire d'une membrane flexible 204. Le volume 211 est destiné à recevoir du fluide hydraulique provenant du corps principal 3 lors d'une compression. Le volume 212 contient un gaz sous pression permettant de refouler du fluide hydraulique présent dans le volume 211 vers le corps principal 3 lors d'une détente. La pression de gaz permet d'une part de faciliter le refoulement du fluide hydraulique vers le corps principal 3 dans une phase de détente, et d'autre part d'éviter la cavitation du fluide hydraulique durant cette même phase de détente. La pression du gaz dans le volume 212 pourra être relativement réduite (par exemple comprise entre 8 et 15 bars en l'absence de fluide dans le volume 211) afin de limiter l'énergie emmagasinée dans le gaz durant la phase de compression. Une pression de gaz plus élevée dans le volume 212 permettra par ailleurs d'utiliser un ressort 310 de raideur plus réduite.

Le bouchon 202 comporte une ou plusieurs molettes 203 permettant par exemple d'assurer le réglage de l'amortisseur 1 en compression. Des valves (non illustrées) sont ménagées dans le bouchon 202. Ces valves induisent une perte de charge de l'écoulement hydraulique provenant de l'entrée/sortie du bouchon 320 lors d'une compression. Les molettes 203 et les valves correspondantes permettent ainsi de réaliser un réglage d'amortissement de compression différencié pour une faible vitesse ou une haute vitesse de compression.

Le corps principal 3 comprend un cylindre intérieur 301 logé à l'intérieur du cylindre extérieur 302. Les cylindres 301 et 302 sont obturés à leurs extrémités par les bouchons 320 et 306. Le volume intérieur des cylindres 301 et 302 est rempli d'une huile appropriée. Un répartiteur 307 est disposé à l'intérieur du cylindre intérieur 301, à proximité du bouchon 320. Le répartiteur 307 obture sélectivement la communication de fluide entre la chambre 323 et le volume disposé à l'intérieur du cylindre intérieur 301. Le répartiteur 307 comporte un conduit d'écoulement principal 324. Ce conduit d'écoulement principal 324 est disposé sensiblement au centre du répartiteur 307. Ce conduit d'écoulement principal 324 est destiné à assurer une communication entre la chambre 323 et le volume à l'intérieur du cylindre 301 avec une perte de charge réduite ou sensiblement nulle. Le répartiteur 307 comporte en outre un ou plusieurs conduits d'écoulement secondaire 325. Les conduits d'écoulement secondaire 325 sont ici disposés à la périphérie du répartiteur 307. Ces conduits d'écoulement secondaire 325 sont destinés à assurer une communication entre la chambre 323 et le volume intérieur du cylindre 301 avec une perte de charge supérieure à celle du conduit 324.

Le système de piston 370 est monté coulissant par rapport au cylindre intérieur 301. Le système de piston 370 comporte une tige creuse 371 délimitant un réservoir interne 372. Le système de piston 370 comporte en outre un piston 373 fixé à une extrémité de la tige 371 et plongé dans le cylindre intérieur 301. L'autre extrémité de la tige 371 s'étend depuis le support de l'alésage 304. Le piston 373 est guidé en coulissement par le cylindre intérieur 301 selon la direction axiale de ce cylindre. Le piston 373 sépare le volume à l'intérieur du cylindre 301 en un volume de compression et un volume de retour.

Un doigt d'obturation 380 est monté coulissant par rapport au système de piston 370. Le doigt 380 est apte à coulisser à l'intérieur du réservoir interne 372 ménagé dans la tige 371. Le doigt 380 est sollicité pour présenter une portion en saillie axialement entre le piston 373 et le répartiteur 307. Un ressort 314 logé dans le réservoir 372 sollicite ainsi le doigt 380 vers sa position en saillie illustrée à la figure 2.

Un orifice 309 est ménagé dans le cylindre intérieur 301 à l'arrière du piston 373. Cet orifice 309 permet une communication entre le volume à l'arrière du piston 373 et le volume ménagé entre le cylindre intérieur 301 et le cylindre extérieur 302.

Un orifice 374 est ménagé dans la tige 371 et met en communication le volume à l'arrière du piston 373 avec le réservoir interne 372 à l'intérieur de la tige 371.

Le corps principal 3 comprend en outre avantageusement un ressort 315 disposé entre le piston 373 et le bouchon 306. Un tel ressort 315 peut être configuré pour éviter les chocs en bout de course d'un mouvement de détente.

La figure 4 est une vue en coupe longitudinale réalisée au niveau d'un répartiteur 307 selon un exemple de mise en oeuvre. Le répartiteur 307 comporte d'une part une vis creuse 330, une platine frontale 350, une platine distale 360, un premier jeu de rondelles 341 et un deuxième jeu de rondelles 342.

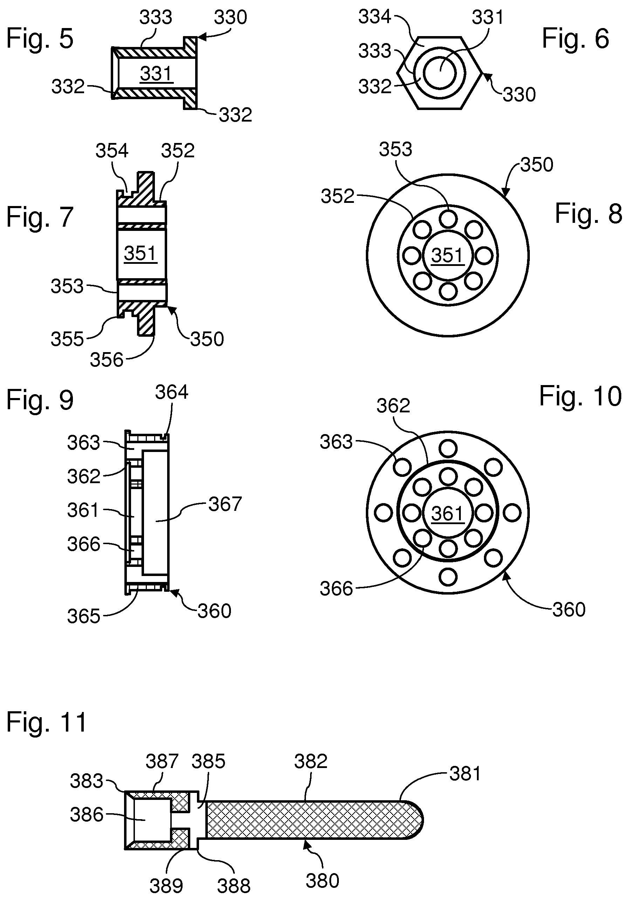

Les figures 5 et 6 représentent plus précisément la vis creuse 330. La vis creuse 330 comporte un alésage traversant 331, destiné à constituer le conduit d'écoulement principal du répartiteur 307. La vis creuse 330 comporte en outre un épaulement 334 au niveau d'une première extrémité et un siège 332 au niveau d'une deuxième extrémité. La vis creuse 330 comporte en outre une face externe 333 filetée.

Les figures 7 et 8 représentent plus précisément la platine frontale 350. La platine frontale 350 comporte un alésage traversant 351 dans sa partie centrale. L'alésage 351 est fileté. La platine frontale 350 comporte une portée cylindrique 355 destinée à s'emmancher dans le cylindre intérieur 301. La portée cylindrique 355 est disposée au niveau d'une première extrémité de la platine frontale 350. Une gorge 354 est ménagée dans la portée 355. La gorge 354 est destinée à recevoir un joint 392 assurant l'étanchéité avec le cylindre intérieur 301. La platine frontale 350 comporte également un épaulement 356 destiné à venir en contact avec l'extrémité du cylindre intérieur 301. La platine frontale 350 comporte également une portée 352 s'étendant depuis l'épaulement 356 au niveau d'une deuxième extrémité. La platine frontale 350 comprend également des alésages traversants 353 ménagés autour de l'alésage 351.

Les figures 9 et 10 représentent plus précisément la platine distale 360. La platine distale 360 comporte un alésage traversant 361 dans sa partie centrale. La platine 360 comporte un lamage 362 au niveau d'une première extrémité et un lamage 367 au niveau d'une deuxième extrémité. L'alésage 361 est traversant entre les lamages 362 et 367. La platine distale 360 comporte une portée cylindrique 365 destinée à s'emmancher dans le bouchon 320. Une gorge 364 est ménagée dans la portée 365. La gorge 364 est destinée à recevoir un joint 393 assurant l'étanchéité avec le bouchon 320. La platine frontale 360 comporte également des alésages traversants 366 ménagés autour de l'alésage 361 et mettant en communication les lamages 362 et 367. La platine frontale 360 comporte également des alésages traversants 363 ménagés autour du lamage 362. Les alésages 363 mettent en communication la première extrémité de la platine distale 360 avec le lamage 367. Le lamage 367 est destiné à loger l'épaulement 334 de la vis 330 et le premier jeu de rondelles 341. Le lamage 362 est destiné à recevoir l'extrémité de la portée 352 de la platine frontale 350.

Le deuxième jeu de rondelles 342 est disposé autour de la portée 352 et s'intercale entre l'épaulement 356 et la première extrémité de la platine distale 360. Les alésages 353 sont dans l'alignement des alésages 366. Les alésages 363 sont en vis-à-vis de l'épaulement 356. La face externe 333 est vissée dans l'alésage fileté 351, de façon à maintenir le premier jeu de rondelles 341 et la platine distale 360 comprimés entre l'épaulement 334 et la platine frontale 350.

La figure 3 est une vue en coupe longitudinale réalisée au niveau du piston 373 et du doigt 380 selon un exemple de mise en oeuvre. Le piston 373 présente ici une forme d'anneau. Une gorge ménagée à la périphérie de l'anneau reçoit un joint 391, assurant l'étanchéité avec le cylindre intérieur 301. L'anneau du piston 373 présente un alésage traversant dans sa partie médiane. Cet alésage est fileté. Une butée réglable 376 est vissée dans cet alésage. La position axiale de la butée réglable 376 peut donc être réglée par vissage. Une extrémité de la tige 371 est également vissée dans cet alésage. Le piston 373 est donc fixé à l'extrémité de la tige 371. La butée réglable 376 comporte un alésage traversant 375 dans sa partie médiane.

La figure 11 détaille plus précisément la structure du doigt 380. Le doigt 380 comporte un arbre 382 traversant l'alésage 375. Cet arbre 382 comporte une extrémité libre arrondie 381. Une butée 389 est formée dans la continuité de l'arbre 382. Un épaulement 388 est ménagé à la jonction entre l'arbre 382 et la butée 389. La butée 389 présente un diamètre supérieur au diamètre de l'alésage 375, de façon à garantir une interférence entre l'épaulement 388 et la butée 376. La butée 389 comporte un siège 383 au niveau de son extrémité libre. Le siège 383 est destiné à venir en contact avec un ressort 314. La butée 389 comporte en outre un alésage 386 en communication avec un alésage 385. Un écoulement de fluide peut donc s'établir entre l'avant de l'épaulement 388 et le réservoir 372. L'alésage 385 est ménagé au niveau de la jonction entre la butée 389 et l'arbre 382. La butée 389 comporte en outre une portée extérieure 387 guidée en coulissement par la face interne de la tige 371.

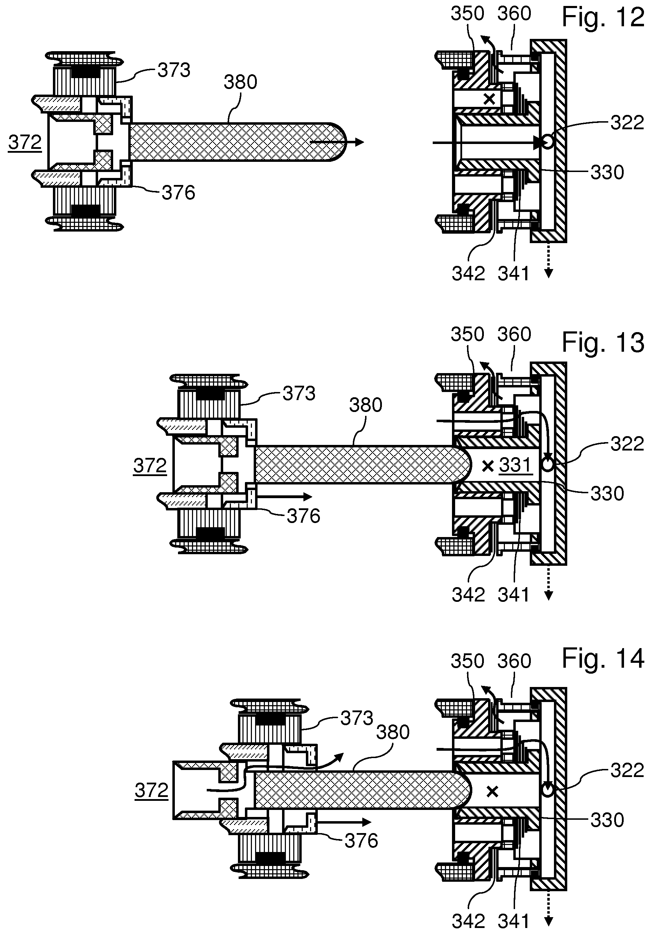

Les figures 12 à 14 représentent différentes phases d'une étape de compression à l'intérieur du corps principal 3. À la figure 12, une compression est initiée entre les alésages 304 et 305. Le piston 373 se rapproche du répartiteur 307. Le piston 373 se déplace de façon solidaire avec le doigt 380. Le doigt 380 est encore écarté du répartiteur 307. L'alésage 331 n'est donc pas obturé. Durant ce mouvement, la quantité de fluide présente à l'intérieur du cylindre intérieur 301 se réduit car du fluide est chassé par le volume croissant occupé par la tige 371. La perte de charge à travers l'alésage 331 étant inférieure à la perte de charge impliquée par le jeu de rondelles 341 à la sortie des alésages 362, le fluide s'écoule à travers l'alésage 331 jusqu'à la l'entrée/sortie 322. De l'huile ayant traversé l'alésage 331 retournant derrière le piston 373 par l'intermédiaire des rondelles 342, le volume de fluide traversant l'entrée/sortie 322 correspond au volume de tige introduit dans le cylindre intérieur 301. Durant cette course du piston 373, le freinage hydraulique en compression est assuré par les valves placées dans le bouchon 202 du réservoir annexe 2 selon une première loi de compression.

À la figure 13, l'extrémité du doigt 380 atteint le siège 332 et obture alors l'alésage 331. Comme illustré à la figure 14, le piston 373 se déplace alors que le doigt 380 est immobilisé. Le doigt 380 coulisse alors à l'intérieur de la tige 371. Durant ce mouvement, la quantité de fluide présente à l'intérieur du cylindre extérieur 302 se réduit car du fluide est encore chassé par le volume croissant occupé par la tige 371. L'alésage 331 étant fermé, l'écoulement de fluide est forcé de traverser les alésages 362 et de fléchir le jeu de rondelles 341, pour atteindre l'entrée/sortie 322. Durant cette course du piston 373, le freinage hydraulique en compression est assuré par les valves placées dans le bouchon 202 et l'association du jeu de rondelles 341 et des alésages 362, selon une deuxième loi de compression. Du fait du coulissement du doigt 380 à l'intérieur de la tige 371, la deuxième loi de compression peut être appliquée sur une partie non négligeable de la course, correspondant sensiblement à la longueur de l'arbre 382. Ce freinage hydraulique accru permet de réduire la raideur du ressort 310 utilisé, et ainsi de stocker une quantité d'énergie inférieure en compression, ce qui permet d'éviter un effet coup de raquette. La course de la deuxième loi de compression peut être ajustée par réglage de la position axiale de la butée 376, qui permet de fixer à partir de quel moment le doigt vient obturer le conduit d'écoulement principal. La deuxième loi de compression étant utilisée avec le déplacement du piston 373, et le volume subissant le freinage hydraulique des rondelles 341 correspondant au volume déplacé par le piston 373, la transition entre les deux lois de compression est particulièrement progressive et le freinage hydraulique est défini avec une grande précision durant la deuxième loi de compression.

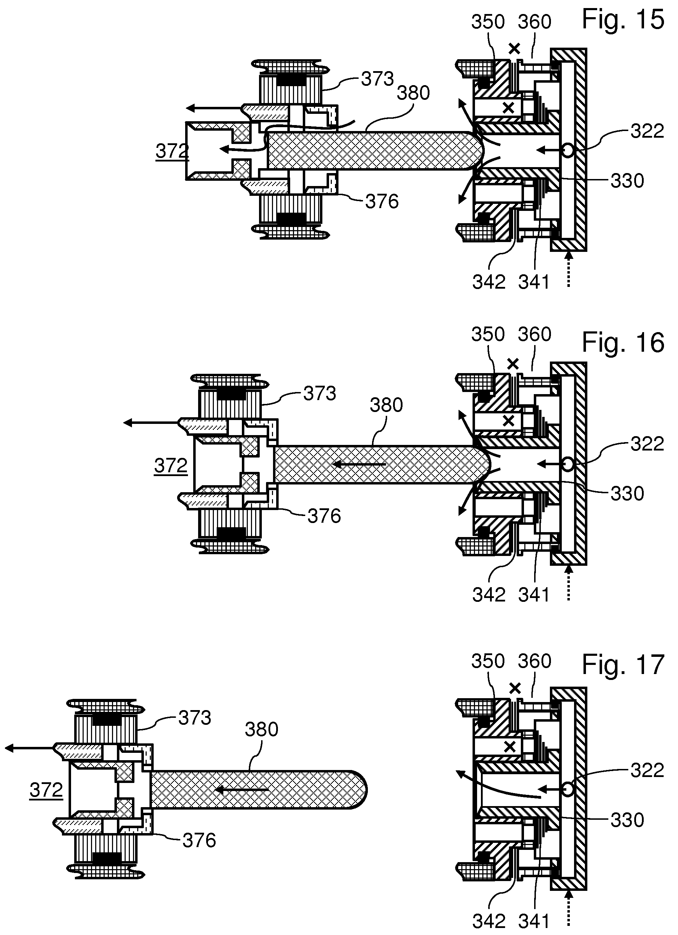

Les figures 15 à 17 représentent différentes phases d'une étape de détente à l'intérieur du corps principal 3. À la figure 15, une détente est initiée entre les alésages 304 et 305 sous l'effet du ressort 310. Le piston 373 s'éloigne du répartiteur 307. Du fluide est renvoyé par le réservoir annexe 2 dans la chambre 323 par l'intermédiaire de l'entrée/sortie. Le doigt 380 est sollicité par le ressort 314 vers le répartiteur 307 mais le retour du fluide lors de la détente repousse le doigt 380 et du fluid revient donc vers l'intérieur du cylindre 301 à travers l'alésage 331. Du fait d'une pression de fluide supérieure entre les cylindres 301 et 302 par rapport à la chambre 323, les rondelles 342 obturent les alésages 363.

À la figure 16, la course de détente du piston 373 atteint un point à partir duquel la butée 376 entraîne le doigt 380 pour l'écarter du siège 332. À la figure 17, la course de détente du piston 373 se poursuit et le doigt 380 libère l'écoulement de fluide à travers l'alésage 331. Le doigt 380 se déplace solidairement avec le piston 373.

Dans l'amortisseur 1 illustré, les réglages de l'amortissement en compression et en détente sont séparés, ce qui permet de réaliser une mise au point optimale et indépendante de ces deux phases d'amortissement. Un même circuit d'amortissement peut également être utilisé pour la compression et la détente.

Dans l'amortisseur 1 illustré, il est fait usage d'un réservoir annexe 2. Cependant, l'invention peut également s'appliquer à un amortisseur dépourvu de réservoir annexe. Dans l'amortisseur 1 illustré, il est fait usage d'un répartiteur 307 incluant un frein hydraulique. Le répartiteur peut bien entendu simplement guider l'écoulement de fluide en compression vers deux circuits de freinage hydrauliques distincts et ménagés ailleurs.

Dans l'amortisseur 1 illustré, le freinage hydraulique dans les conduits secondaires est assuré par le premier jeu de rondelles 341. D'autres systèmes de freinage hydrauliques peuvent bien entendu être mis en oeuvre. Le freinage hydraulique dans les conduits secondaires peut être calibré en jouant sur l'épaisseur et les diamètres des rondelles superposées dans le jeu de rondelles 341.

## Revendications

1. Amortisseur hydraulique (1) de véhicule comprenant:
- un réservoir (301) rempli de fluide hydraulique solidaire d'un premier organe de fixation (305) ;
- un piston (373) monté coulissant dans le réservoir selon une direction axiale ;
- un arbre (371) s'étendant selon la direction axiale d'un premier côté par rapport au piston et présentant une première extrémité solidaire du piston et une deuxième extrémité comportant un deuxième organe de fixation (304) ;
- un répartiteur (307) comportant :
- un orifice primaire (324) débouchant dans le réservoir d'un deuxième côté du piston opposé au premier côté, l'orifice primaire étant en communication avec un premier circuit d'écoulement de fluide ; et
- un orifice secondaire (325) débouchant dans le réservoir du deuxième côté du piston et en communication avec un deuxième circuit d'écoulement de fluide, la perte de charge à travers le deuxième circuit d'écoulement étant supérieure à la perte de charge à travers le premier circuit d'écoulement ;
- une protubérance (380) saillante du deuxième côté par rapport au piston, la protubérance étant écartée de l'orifice primaire sur une première partie de la course du piston et obturant l'orifice primaire sur une deuxième partie de la course du piston,
**caractérisé en ce que** la protubérance (380), montée coulissante par rapport au piston (373), est configurée pour coulisser dans une cavité (372) ménagée à l'intérieur de l'arbre (371).

2. Amortisseur hydraulique (1) selon la revendication 1, comprenant en outre un premier ressort (314) sollicitant la protubérance (380) en direction du répartiteur (307).

3. Amortisseur hydraulique (1) selon l'une quelconque des revendications précédentes, comprenant une butée (376) dont la position axiale par rapport au piston (373) est réglable, la butée (376) bridant la saillie maximale de la protubérance (380) par rapport au piston (373).

4. Amortisseur hydraulique (1) selon l'une quelconque des revendications précédentes, comprenant un deuxième ressort (310) sollicitant les premier et deuxième organes de fixation (305,304) pour les écarter l'un de l'autre.

5. Amortisseur hydraulique (1) selon l'une quelconque des revendications précédentes, dans lequel le répartiteur (307) est fixé à une extrémité du réservoir (301) disposée du deuxième côté du piston (373), et dans lequel le premier organe de fixation (305) est fixé à cette extrémité du réservoir.

6. Amortisseur hydraulique (1) selon l'une quelconque des revendications précédentes, dans lequel le répartiteur (307) comporte :
- un conduit (353,366) inclus dans le deuxième circuit d'écoulement, le conduit débouchant sur l'orifice secondaire et sur un orifice de sortie ;
- un élément flexible (341) formant une restriction d'écoulement au niveau de l'orifice de sortie, l'élément flexible (341) étant configuré pour fléchir en fonction de la pression de fluide dans le conduit.

7. Amortisseur hydraulique (1) selon la revendication 6, dans lequel l'élément flexible (341) comprend un empilement de rondelles de différents diamètres, ces rondelles étant fixées au répartiteur (307) au niveau de leur partie médiane, la périphérie d'au moins une desdites rondelles formant une restriction d'écoulement au niveau de l'orifice de sortie dudit conduit.

8. Amortisseur hydraulique (1) selon la revendication 7, comprenant une vis creuse (330) solidarisant l'empilement de rondelles au répartiteur (307) et présentant un alésage traversant (331) inclus dans le premier circuit d'écoulement et dont une extrémité forme l'orifice primaire.

9. Amortisseur hydraulique (1) selon l'une quelconque des revendications précédentes, dans lequel le deuxième circuit d'écoulement inclut le premier circuit d'écoulement et un prolongement du premier circuit d'écoulement, ledit prolongement incluant au moins un organe de restriction d'écoulement (341).

## Patentansprüche

1. Hydraulischer Stoßdämpfer (1) für ein Fahrzeug, aufweisend:
- einen mit Hydraulikflüssigkeit gefüllten Tank (301), welcher mit einem ersten Befestigungsglied (305) fest verbunden ist;
- einen Kolben (373), welcher in dem Tank gemäß einer axialen Richtung gleitend montiert ist;
- eine Stange (371), welche sich gemäß der axialen Richtung an einer ersten Seite in Bezug auf den Kolben erstreckt und ein erstes, fest mit dem Kolben verbundenes Ende und ein zweites Ende aufweist, welches ein zweites Befestigungsglied (304) umfasst;
- einen Verteiler (307) umfassend:
- eine primäre Öffnung (324), welche auf einer zweiten Seite des Kolbens, die der ersten Seiten gegenüber liegt, in den Tank mündet, wobei die primäre Öffnung mit einem ersten Flüssigkeit-Abflusskreis in Verbindung steht; und
- eine sekundäre Öffnung (325), welche auf der zweiten Seite des Kolbens in den Tank mündet und mit einem zweiten Flüssigkeit-Abflusskreis in Verbindung steht, wobei der Druckverlust über den zweiten Flüssigkeit-Abflusskreis größer als der Druckverlust über den ersten Flüssigkeit-Abflusskreis ist;
- eine an der zweiten Seite in Bezug auf den Kolben hervorspringende Ausstülpung (380), wobei die Ausstülpung über einen ersten Abschnitt des Weges des Kolbens von der primären Öffnung beabstandet ist und über einen zweiten Abschnitt des Weges des Kolbens die primäre Öffnung verschließt,
**dadurch gekennzeichnet, dass** die in Bezug auf den Kolben (373) gleitend montierte Ausstülpung (380) dafür ausgelegt ist, um in einen im Inneren der Stange (371) eingerichteten Hohlraum (372) zu gleiten.

2. Hydraulischer Stoßdämpfer (1) nach Anspruch 1, außerdem aufweisend eine erste Feder (314), welche die Ausstülpung (380) in Richtung des Verteilers (307) belastet.

3. Hydraulischer Stoßdämpfer (1) nach einem der vorhergehenden Ansprüche, aufweisend einen Anschlag (376), dessen axiale Position in Bezug auf den Kolben (373) einstellbar ist, wobei der Anschlag (376) den maximalen Vorsprung der Ausstülpung (380) in Bezug auf den Kolben (373) einschränkt.

4. Hydraulischer Stoßdämpfer (1) nach einem der vorhergehenden Ansprüche, aufweisend eine zweite Feder (310), welche das erste und zweite Befestigungsglied (305, 304) belastet, um sie voneinander zu beabstanden.

5. Hydraulischer Stoßdämpfer (1) nach einem der vorhergehenden Ansprüche, bei welchem der Verteiler (307) an einem Ende des Tanks (301) befestigt ist, welches an der zweiten Seite des Kolbens (373) angeordnet ist, und bei welchem das erste Befestigungsglied (305) an diesem Ende des Tanks befestigt ist.

6. Hydraulischer Stoßdämpfer (1) nach einem der vorhergehenden Ansprüche, bei welchem der Verteiler (307) Folgendes aufweist:
- einen in dem zweiten Flüssigkeit-Abflusskreis enthaltenen Kanal (353, 366), wobei der Kanal in die sekundäre Öffnung und in eine Austrittsöffnung mündet;
- ein flexibles Element (341), welches eine Abflussbegrenzung im Bereich der Austrittsöffnung bildet, wobei das flexible Element (341) dafür ausgelegt ist, um sich in Abhängigkeit vom Flüssigkeitsdruck in dem Kanal zu biegen.

7. Hydraulischer Stoßdämpfer (1) nach Anspruch 6, bei welchem das flexible Element (341) einen Stapel von runden Scheiben von verschiedenen Durchmessern bildet, wobei diese runden Scheiben am Verteiler (307) im Bereich ihres mittleren Abschnitts befestigt sind, wobei der Umfang von mindestens einer der runden Scheiben eine Abflussbegrenzung im Bereich der Austrittsöffnung des Kanals bildet.

8. Hydraulischer Stoßdämpfer (1) nach Anspruch 7, welcher eine hohle Schraube (330) aufweist, welche den Stapel von runden Scheiben mit dem Verteiler (307) fest verbindet und eine durchlaufende Bohrung (331) aufweist, welche im ersten Flüssigkeit-Abflusskreis enthalten ist und dessen eines Ende die primäre Öffnung bildet.

9. Hydraulischer Stoßdämpfer (1) nach einem der vorhergehenden Ansprüche, bei welchem der zweite Flüssigkeit-Abflusskreis den ersten Flüssigkeit-Abflusskreis und eine Verlängerung des ersten Flüssigkeit-Abflusskreises enthält, wobei die Verlängerung mindestens ein Abfluss-Begrenzungsglied (341) enthält.

## Claims

1. Vehicle hydraulic shock absorber (1) comprising:
- a reservoir (301) filled with hydraulic fluid and secured to a first fixing member (305);
- a piston (373) slideably mounted in the reservoir in an axial direction;
- a shaft (371) extending in the axial direction on a first side with respect to the piston and having a first end secured to the piston and a second end comprising a second fixing member (304);
- a distributor (307) comprising:
- a primary orifice (324) opening into the reservoir on a second side of the piston opposite to the first side, the primary orifice being in communication with a first fluid flow circuit; and
- a secondary orifice (325) opening into the reservoir on the second side of the piston and in communication with a second fluid flow circuit, the pressure drop across the second flow circuit being greater than the pressure drop across the first flow circuit;
- a protuberance (380) projecting on the second side with respect to the piston, the protuberance being separated from the primary orifice over a first part of the stroke of the piston and closing off the primary orifice over a second part of the stroke of the piston,
**characterized in that** the protuberance (380), which is mounted slideably with respect to the piston (373), is configured to slide in a cavity (372) formed inside the shaft (371).

2. Hydraulic shock absorber (1) according to Claim 1, additionally comprising a first spring (314) loading the protuberance (380) in the direction of the distributor (307).

3. Hydraulic shock absorber (1) according to either one of the preceding claims, comprising a stop (376) of which the axial position with respect to the piston (373) is adjustable, the stop (376) restricting the maximum projection of the protuberance (380) with respect to the piston (373).

4. Hydraulic shock absorber (1) according to any one of the preceding claims, comprising a second spring (310) loading the first and second fixing members (305, 304) so as to separate them from one another.

5. Hydraulic shock absorber (1) according to any one of the preceding claims, in which the distributor (307) is fixed at an end of the reservoir (301) that is arranged on the second side of the piston (373), and in which the first fixing member (305) is fixed at this end of the reservoir.

6. Hydraulic shock absorber (1) according to any one of the preceding claims, in which the distributor (307) comprises:
- a duct (353, 366) included within the second flow circuit, the duct opening onto the secondary orifice and onto an outlet orifice;
- a flexible element (341) forming a flow restriction at the outlet orifice, the flexible element (341) being configured to bend as a function of the fluid pressure in the duct.

7. Hydraulic shock absorber (1) according to Claim 6, in which the flexible element (341) comprises a stack of washers of different diameters, these washers being fixed to the distributor (307) at their mid-part, the periphery of at least one of the said washers forming a flow restriction at the outlet orifice of the said duct.

8. Hydraulic shock absorber (1) according to Claim 7, comprising a hollow screw (330) securing the stack of washers to the distributor (307) and having a through-bore (331) included within the first flow circuit and of which an end forms the primary orifice.

9. Hydraulic shock absorber (1) according to any one of the preceding claims, in which the second flow circuit includes the first flow circuit and an extension of the first flow circuit, the said extension including at least one flow restriction member (341).
